# FASCICULE DE BREVET EUROPEEN

(11) **EP 1 469 288 B1**
(45) Date de publication et mention de la délivrance du brevet: **21.05.2008**
(21) Numéro de dépôt: 04300180.9
(22) Date de dépôt: 02.04.2004
(51) Int. Cl.: G01F 3/08

(54) **Compteur d'eau à chambre de mesure volumétrique**
Wassermesser mit volumetrischer Messkammer
Water meter with volumetric measuring chamber

(30) Priorité: 04.04.2003 FR 0350087
(43) Date de publication de la demande: 20.10.2004
(73) Titulaire: Actaris SAS, 92100 Boulogne (FR)
(72) Inventeur: Mercier, Alcide, 71960 Serrieres (FR)
(74) Mandataire: Lenne, Laurence

(56) Documents cités:
- GB-A- 667 721
- GB-A- 678 483
- US-A- 3 842 672

## Description

La présente invention concerne un compteur de fluide, en particulier un compteur d'eau à chambre de mesure volumétrique.

Un tel compteur connu, par exemple comme celui décrit dans US 3842672, comporte un carter ou bâche pourvu d'une conduite d'arrivée et d'une conduite de sortie et dans lequel est insérée une chambre de mesure volumétrique du type à piston oscillant. Cette chambre de mesure est pourvue d'au moins une ouïe d'entrée et d'au moins une ouïe de sortie. Un tel compteur est bien connu de l'homme du métier.

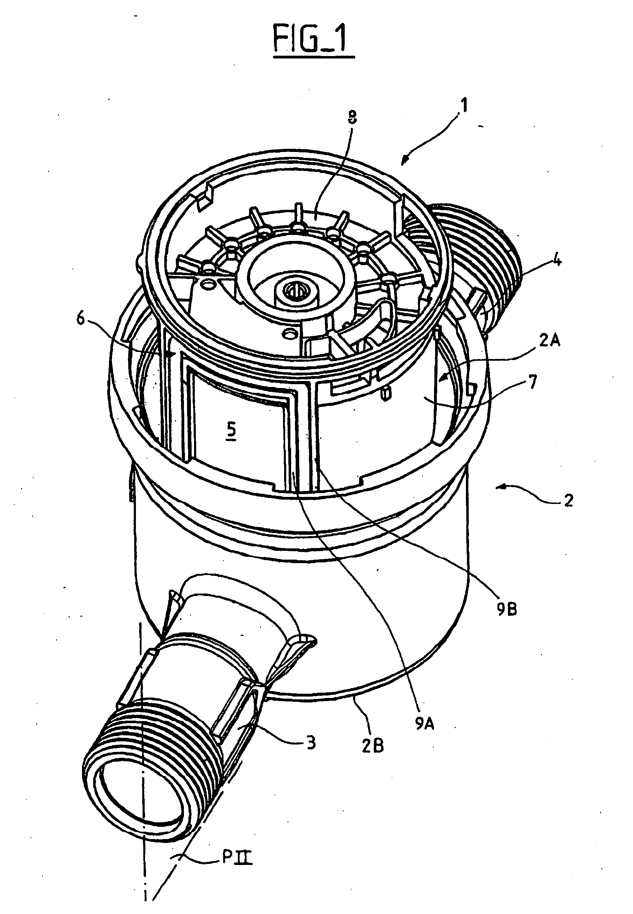

Dans certaines conformations de cette chambre de mesure telles que représenté sur la figure 1, l'ouïe d'entrée ou l'ouïe de sortie 5 est conformée sur la paroi latérale de l'enveloppe de la chambre 1 sur une hauteur déterminée. Cette ouïe doit être connectée de façon étanche à la conduite d'arrivée ou de sortie correspondante 3, 4 et, pour ce faire, un joint 6 est mis en place dans une rainure agencée sur la face externe de l'enveloppe de la chambre autour de l'ouïe. Une fois la chambre de mesure 1 mise en place dans la bâche 2, ce joint 6 est serré dans la fente existant entre chambre de mesure et bâche et assure le passage étanche du fluide entre ouïe et conduite correspondante.

De façon connue, la chambre de mesure 1 a sa surface externe cylindrique de section générale circulaire constante, sauf à l'endroit de maintien du joint, et il en est de même pour la surface interne de la bâche 2. Le joint 6 est de forme correspondante à celle de l'ouïe, généralement rectangulaire.

Le montage est effectué par mise en place du joint dans sa rainure sur la chambre de mesure 1 puis insertion de la chambre de mesure dans la bâche 2.

Afin de réaliser l'étanchéité, le joint est à l'état de repos de diamètre supérieur à la largeur de la fente existant entre chambre de mesure et bâche. Il est donc soumis lors de l'insertion de la chambre de mesure, qui est de section générale circulaire constante, à des efforts de direction opposée à la direction d'insertion de la chambre de mesure dans la bâche, également de section circulaire constante, et ceci sur toute la hauteur d'assemblage. Ces efforts relativement importants peuvent avoir pour conséquences de chasser le joint hors de la rainure, le joint se détachant de la chambre de mesure qui risque d'être assemblée à la bâche sans étanchéité rendant le compteur hors usage, de le déformer dans une direction opposée à la direction d'insertion et même de le couper. Ces problèmes sont incompatibles avec un assemblage du compteur en grande série.

L'invention résout ces problèmes et, pour ce faire, elle propose un compteur de fluide en particulier compteur d'eau, comportant une bâche comportant un fond et dans laquelle est insérée par une ouverture opposée au dit fond selon une direction dite d'insertion parallèle à son axe de symétrie une chambre de mesure pourvue d'au moins une ouïe latérale connectée de façon étanche à une conduite de la bâche par l'intermédiaire d'un joint, ce joint étant comprimé entre une surface externe de la chambre, dite première surface, et une surface interne de la bâche, dite seconde surface, caractérisé en ce que lesdites surfaces sont inclinées par rapport à l'axe de symétrie de la bâche, la distance entre ces surfaces et cet axe de symétrie étant minimale à proximité dudit fond.

Selon un mode de réalisation préféré, la distance entre ces première et seconde surfaces et dit axe de symétrie est inversement proportionnelle à la distance entre ces surfaces et ladite ouverture supérieure.

De préférence, les première et seconde surfaces sont sensiblement parallèles, le joint étant de section constante.

Ce joint peut être de section circulaire ou non, dans ce dernier cas par exemple à lèvre.

Avantageusement, ledit joint est logé dans une rainure agencée sur la chambre et dont le fond de rainure constitue ladite première surface.

Dans ce cas, ladite rainure est délimitée par deux nervures dont la face d'extrémité est parallèle au dit fond de rainure.

Avantageusement, toute la surface interne de la bâche est tronconique.

L'invention est particulièrement bien adaptée aux bâches en matière plastique. En effet, ces bâches ont dans ce cas cette forme tronconique interne à cause de leur moulage et démoulage nécessitant une dépouille.

Grâce à l'invention, le montage devient compatible avec les contraintes d'assemblage en grande série quant à la qualité et la productivité, sans ajout d'opérations autre que l'insertion par emmanchement de la chambre de mesure dans la bâche.

L'invention est décrite ci-après plus en détail à l'aide de figures ne représentant qu'un mode de réalisation préféré de l'invention.

La figure 1 est une vue d'un compteur lors de son assemblage.

Les figures 2 et 3 sont des vues en coupe selon le plan PII d'un compteur conforme à l'invention, la figure 3 étant une vue partielle.

Comme représenté sur la figure 1, un compteur de fluide, ici un compteur d'eau, comporte une chambre de mesure 1 volumétrique du type à piston oscillant insérée selon une direction dite d'insertion dans une bâche 2, portant une conduite d'arrivée 4 et une conduite de sortie 3. Plus précisément, la chambre est insérée par une ouverture 2A opposée au fond 2B de la bâche. La direction d'insertion est parallèle à l'axe de symétrie A de bâche 2.

L'enveloppe externe 7 et le couvercle 8 de la chambre de mesure forment une ouïe 5 conformée donc sur la paroi latérale de la chambre 1 sur une hauteur déterminée et devant être connectée de façon étanche à la conduite de sortie 3 et, pour ce faire, un joint 6 de section circulaire, élastique radialement et de forme générale rectangulaire comme l'ouïe est mis en place dans une rainure agencée sur la face externe de l'enveloppe 7 de la chambre autour de l'ouïe 5.

La rainure est conformée de deux nervures 9A, 9B issues de moulage sur l'enveloppe extérieure 7 et le couvercle 8 de la chambre de mesure autour de l'ouïe 5.

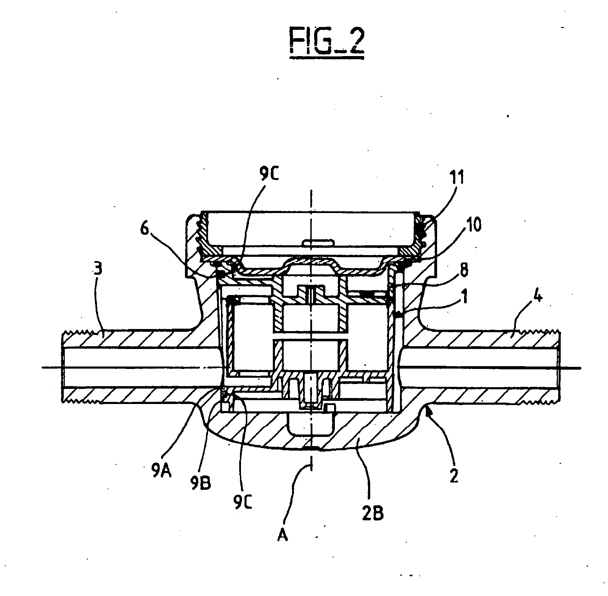

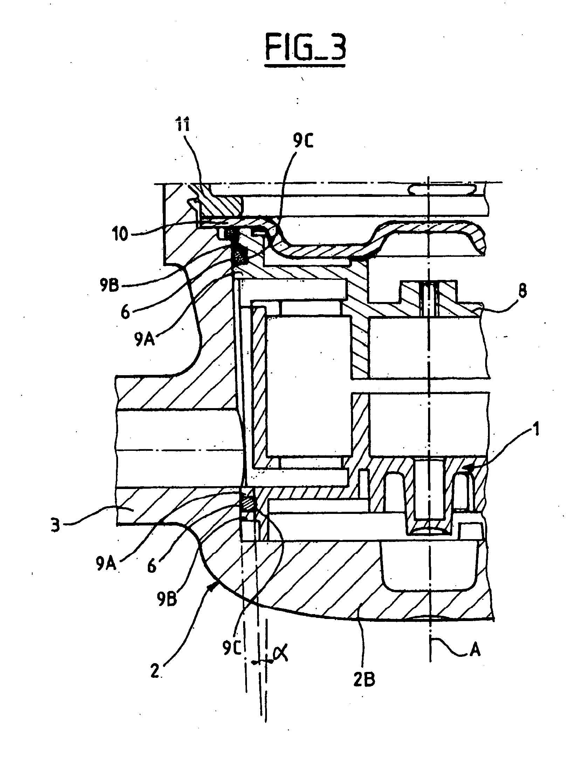

Sur les figures 2 et 3, les éléments analogues à ceux de la figure 1 sont référencés de façon identique. Par ailleurs, la chambre de mesure volumétrique 1 y est représentée sans piston et sa constitution interne ne sera pas précisée, étant en soi bien connue. De façon également connue, un plateau 10 est disposé au-dessus de la chambre avec un joint d'étanchéité extérieur intercalé entre lui et la chambre et la bâche. Ce joint est comprimé par une bague vissée 11 assurant le blocage des éléments emboîtés.

Le joint 6 est donc comprimé entre une surface externe de la chambre, dite première surface, constituée par le fond 9C de la rainure et une surface interne de la bâche, dite seconde surface, constituée par la surface interne de la bâche à proximité de la conduite 3. Afin de faciliter la fabrication de la bâche 2, toute sa surface interne est tronconique. Selon l'invention, ces surfaces sont inclinées par rapport à l'axe de symétrie A de la bâche, la distance entre ces surfaces et l'axe de symétrie A étant minimale à proximité du fond 2B de la bâche 2.

Plus précisément, selon le mode de réalisation décrit, la distance entre ces première et seconde surfaces et l'axe de symétrie A est inversement proportionnelle à la distance entre ces surfaces et l'ouverture supérieure 2A de la bâche 2 par laquelle est mis en place la chambre de mesure 1. Ces première et seconde surfaces sont sensiblement parallèles, le joint 6 étant de section circulaire constante.

Par ailleurs, afin de réaliser le centrage de la chambre 1 dans la bâche 2, les deux nervures 9A, 9B ont leur face d'extrémité parallèle au fond de rainure 9C.

Le montage des différentes pièces s'effectue tout d'abord par emboîtement du joint 6 dans la rainure. Puis la chambre de mesure 1 équipée de ce joint 6 est insérée dans la bâche 2 dans une direction d'insertion parallèle à son axe de symétrie. Compte tenu de la conicité d'angle α identique du fond de rainure 9C et de la surface interne de la bâche 2, le contact du joint 6 sur cette surface interne et sa compression souhaitée pour réaliser l'étanchéité s'effectue juste dans la position définitive de montage, lorsque la chambre est installée au fond de la bâche. La face d'extrémité des deux nervures 9A, 9B vient alors en butée contre la surface interne de la bâche assurant le maintien et le centrage de la chambre de mesure 1 dans cette dernière.

Dans ce qui précède a été décrit le cas d'une ouïe de sortie 5 devant communiquer avec la conduite de sortie 3 de la bâche, mais l'invention s'applique bien sûr également au cas d'une ouïe d'entrée d'un même type devant communiquer avec la conduite d'arrivée 4 de la bâche.

Par ailleurs selon le mode de réalisation décrit, le joint est monté dans une rainure portée par la chambre de mesure, mais cette rainure peut être portée par la bâche selon le même principe.

Dans ce qui précède, il est envisagé des première et seconde surfaces sensiblement parallèles, le joint 6 étant de section circulaire constante. Un autre mode de réalisation entre dans le cadre de l'invention. Ces surfaces dites première et seconde peuvent ne pas être parallèles et le joint peut être conçu pour rattraper le jeu d'épaisseur variable entre ces surfaces. Il peut dans ce cas être de section circulaire ou non circulaire. Cet autre mode de réalisation présente l'avantage de limiter le frottement et d'éviter un coincement éventuel lors de l'insertion de la chambre de mesure dans la bâche.

## Revendications

1. Compteur de fluide en particulier compteur d'eau, comportant une bâche (2) comportant un fond et dans laquelle est insérée par une ouverture opposée au dit fond selon une direction dite d'insertion parallèle à son axe de symétrie une chambre de mesure (1) pourvue d'au moins une ouïe (5) latérale connectée de façon étanche à une conduite (3) de la bâche (2) par l'intermédiaire d'un joint (6), ce joint étant comprimé entre une surface externe de la chambre (1), dite première surface, et une surface interne de la bâche (2), dite seconde surface, **caractérisé en ce que** lesdites surfaces sont inclinées par rapport à l'axe de symétrie (A) de la bâche, la distance entre ces surfaces et cet axe de symétrie (A) étant minimale à proximité dudit fond (2B).

2. Compteur selon la revendication 1, **caractérisé en ce que** la distance entre ces première et seconde surfaces et dit axe de symétrie (A) est inversement proportionnelle à la distance entre ces surfaces et ladite ouverture supérieure (2A).

3. Compteur selon la revendication 1 ou 2, **caractérisé en ce que** les première et seconde surfaces sont sensiblement parallèles, le joint (6) étant de section constante.

4. Compteur selon l'une des revendications précédentes, **caractérisé en ce que** ledit joint (6) est logé dans une rainure agencée sur la chambre de mesure (1) et dont le fond de rainure (9C) constitue ladite première surface.

5. Compteur selon la revendication 4, **caractérisé en ce que** ladite rainure est délimitée par deux nervures (9A, 9B) dont la face d'extrémité est parallèle au dit fond de rainure (9C).

6. Compteur selon l'une des revendications précédentes, **caractérisé en ce que** toute la surface interne de la bâche (2) est tronconique.

7. Compteur selon l'une des revendication précédentes, **caractérisé en ce que** la bâche est en matière plastique.

## Claims

1. Fluid meter, in particular a water meter, comprising a tank (2) having a bottom and into which is inserted through an opening opposite said bottom in an insertion direction parallel to its axis of symmetry a measurement chamber (1) having at least one lateral orifice (5) connected in a sealed manner to a pipe (3) of the tank (2) via a seal (6) that is compressed between an external surface of the chamber (1), called the first surface, and an internal surface of the tank (2), called the second surface, **characterised in that** said surfaces are inclined to the axis of symmetry (A) of the tank and the minimum distance between said surfaces and said axis of symmetry (A) is near said bottom (2B).

2. Meter according to claim 1, **characterised in that** the distance between said first and second surfaces and said axis of symmetry (A) is inversely proportional to the distance between said surfaces and said upper opening (2A).

3. Meter according to claim 1 or 2, **characterised in that** the first and second surfaces are substantially parallel and the seal (6) is of constant section.

4. Meter according to any preceding claim, **characterised in that** said seal (6) is housed in a groove formed on the measurement chamber (1) and the bottom of which groove (9C) constitutes said first surface.

5. Meter according to claim 4, **characterised in that** said groove is delimited by two ribs (9A, 9B) the end faces of which are parallel to said groove bottom (9C).

6. Meter according to any preceding claim, **characterised in that** the whole of the internal surface of the tank (2) is frustoconical.

7. Meter according to any preceding claim, **characterised in that** the tank is made of a plastic material.

## Patentansprüche

1. Fluidzähler, insbesondere Wasserzähler, mit einem Gehäuse (2), das einen Boden aufweist, in dem durch eine dem Boden gegenüberliegende Öffnung in einer so genannten Einführrichtung parallel zu seiner Symmetrieachse eine Messkammer (1) eingeführt ist, die mit mindestens einem lateralen Durchlass (5) versehen ist, welcher über eine Dichtung (6) dicht mit einer Leitung (3) des Gehäuses (2) verbunden ist, wobei diese Dichtung zwischen einer Außenfläche der Kammer (1), der so genannten ersten Fläche, und einer Innenfläche des Gehäuses (2), der so genannten zweiten Fläche, komprimiert wird, **dadurch gekennzeichnet, dass** die Flächen bezüglich der Symmetrieachse (A) des Gehäuses geneigt sind und der Abstand zwischen diesen Flächen und dieser Symmetrieachse (A) in der Nähe des Bodens (2B) minimal ist.

2. Zähler nach Anspruch 1, **dadurch gekennzeichnet, dass** der Abstand zwischen dieser ersten und zweiten Fläche und der Symmetrieachse (A) umgekehrt proportional zu dem Abstand dieser Flächen und der oberen Öffnung (2A) ist.

3. Zähler nach Anspruch 1 oder 2, **dadurch gekennzeichnet, dass** die erste und zweite Fläche im Wesentlichen parallel verlaufen, wobei die Dichtung (6) einen konstanten Querschnitt aufweist.

4. Zähler nach einem der vorhergehenden Ansprüche, **dadurch gekennzeichnet, dass** die Dichtung (6) in einer an der Messkammer (1) angeordneten Nut untergebracht ist, wobei der Nutgrund (9C) die erste Fläche bildet.

5. Zähler nach Anspruch 4, **dadurch gekennzeichnet, dass** die Nut durch zwei Stege (9A, 9B) begrenzt ist, deren Endfläche parallel zum Nutgrund (9C) verläuft.

6. Zähler nach einem der vorhergehenden Ansprüche, **dadurch gekennzeichnet, dass** die ganze Innenfläche des Gehäuses (2) kegelstumpfförmig ist.

7. Zähler nach einem der vorhergehenden Ansprüche, **dadurch gekennzeichnet, dass** das Gehäuse aus Kunststoffmaterial hergestellt ist.
